# FASCICULE DE BREVET EUROPEEN

(11) **EP 3 625 027 B1**
(45) Date de publication et mention de la délivrance du brevet: **07.04.2021**
(21) Numéro de dépôt: 18722586.7
(22) Date de dépôt: 14.05.2018
(51) Int. Cl.: B29C 55/16, B29C 55/20, B29K 105/04, B29L 31/34, B29L 11/00

(54) **DISPOSITIF D'ÉTIRAGE DE FILM THERMOPLASTIQUE SIMULTANÉMENT DANS LE SENS LONGITUDINAL ET DANS LE SENS TRANSVERSAL**
VORRICHTUNG ZUM GLEICHZEITIGEN RECKEN VON THERMOPLASTISCHER FOLIE IN LÄNGS- UND QUERRICHTUNG
DEVICE FOR STRETCHING THERMOPLASTIC FILM SIMULTANEOUSLY IN THE LONGITUDINAL AND TRANSVERSE DIRECTIONS

(30) Priorité: 15.05.2017 FR 1754255
(43) Date de publication de la demande: 25.03.2020
(73) Titulaire: Darlet, Jean-Pierre, Shanghai 200020 (CN)
(72) Inventeur: Darlet, Jean-Pierre, Shanghai 200020 (CN)
(74) Mandataire: LLR
(86) Numéro de dépôt international: PCT/EP2018/062353
(87) Numéro de publication internationale: WO 2018/210737

(56) Documents cités:
- JP-A- 2011 126 024
- US-A- 3 148 409
- US-A- 3 491 402

## Description

La présente invention concerne un dispositif d'étirage de film thermoplastique simultanément dans le sens longitudinal et dans le sens transversal.

Il est bien connu de réaliser l'étirage d'un film en matière synthétique thermoplastique au moyen d'un dispositif réalisant l'étirage simultané du film dans le sens longitudinal et dans le sens transversal, alors que la matière du film est rendue malléable par chauffage. Ce chauffage est en particulier réalisé par passage du film dans un tunnel chauffant, dans lequel est placé le dispositif.

De tels dispositifs sont donc connus dans leur principe depuis de très nombreuses années. Ils avaient pratiquement disparu à cause de la complexité des dispositifs permettant de les mettre en œuvre mais sont redevenus d'actualité récemment compte tenu du développement de plusieurs nouveaux types de films ne pouvant être produits que par des procédés d'étirage simultané. Tel est le cas des films mettant en œuvre des résines à une vitesse de cristallisation élevée, qui ne permettent pas d'être étirés de façon dite séquentielle, c'est-à-dire sur des dispositifs dans lesquels l'étirage longitudinal se fait sur une première machine puis l'étirage transversal sur une deuxième machine, comme cela est le cas pour de nombreux types de film mettent enjeu des matières simples.

D'autres types de film sont également apparus sur le marché, qui se présentent généralement sous forme de membrane, c'est-à-dire de film présentant une porosité. Cette porosité, pour des applications telles que celles qui sont nécessaires pour la production de batteries électriques, doit être répartie régulièrement sur toute la largeur du film produit, ce que ne permettent pas non plus, ni les étirages de type séquentiel, ni les étirages simultanés non réglables tels qu'ils existent depuis plusieurs décennies.

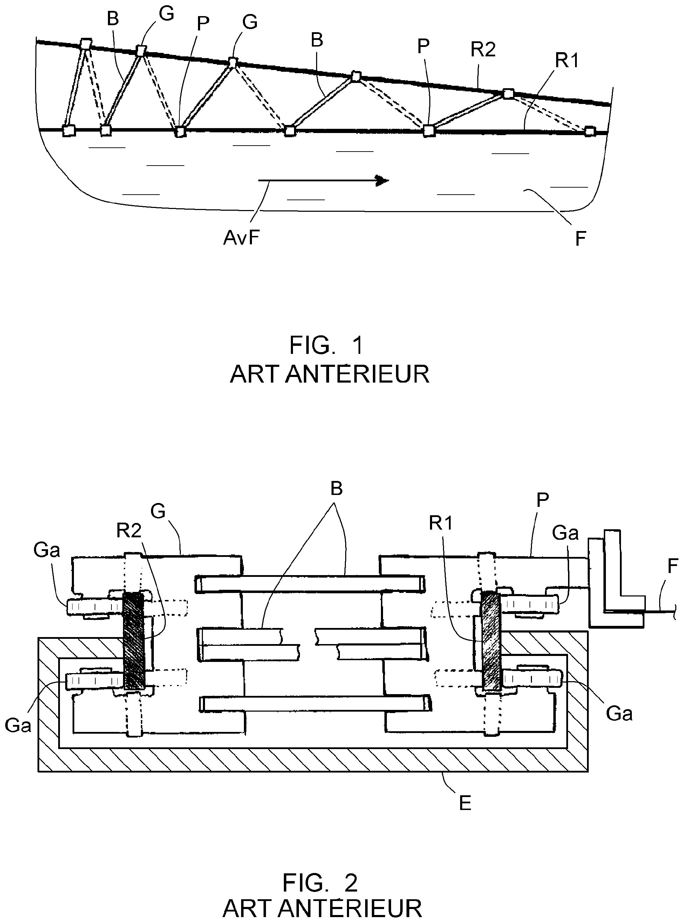

Tous les systèmes existants utilisent le principe bien connu dit "en pantographe", illustré sur la figure 1 annexée, laquelle montre, de façon très simplifiée, l'un des deux sous-ensembles du dispositif situé sur un côté du film F, permettant l'étirage du film sur un côté. Un sous-ensemble identique à celui représenté sur cette figure 1 est placé sur le côté opposé du film, de façon symétrique à ce premier sous-ensemble par rapport à l'axe médian longitudinal du film F. Comme cela est visible, des organes P de saisie du film F, sous forme de pinces, et des organes de guidage G sont positionnées alternativement sur un premier rail R1 proche du film F et sur un deuxième rail R2 plus éloigné du film, qui sont fixes l'un par rapport à l'autre, ces organes de saisie P et ces organes de guidage G étant reliés entre eux par des bielles B. Le rail R2 est orienté de façon à converger vers le rail R1 dans la direction aval par rapport à la direction AvF d'avance du film F, ce dont il résulte un écartement progressif des pinces P au cours de l'avance du film, créant l'étirage longitudinal désiré par l'ouverture des bielles B constituant le pantographe. La figure 2 est une vue en coupe transversale du sous-ensemble précité, à échelle agrandie, montrant que les rails R1, R2 sont reliés l'un à l'autre par une embase E et que les organes de saisie P et les organes de guidage G sont guidés sur ces rails par des paires de galets Ga roulants sur les côtés internes et externes des rails ainsi que sur les tranches supérieures et inférieures de ceux-ci.

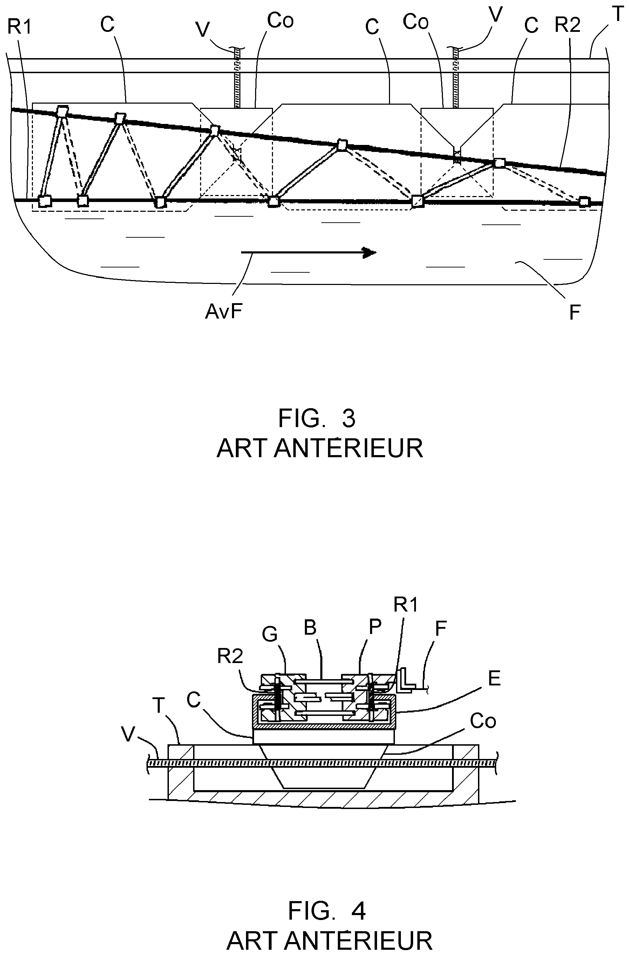

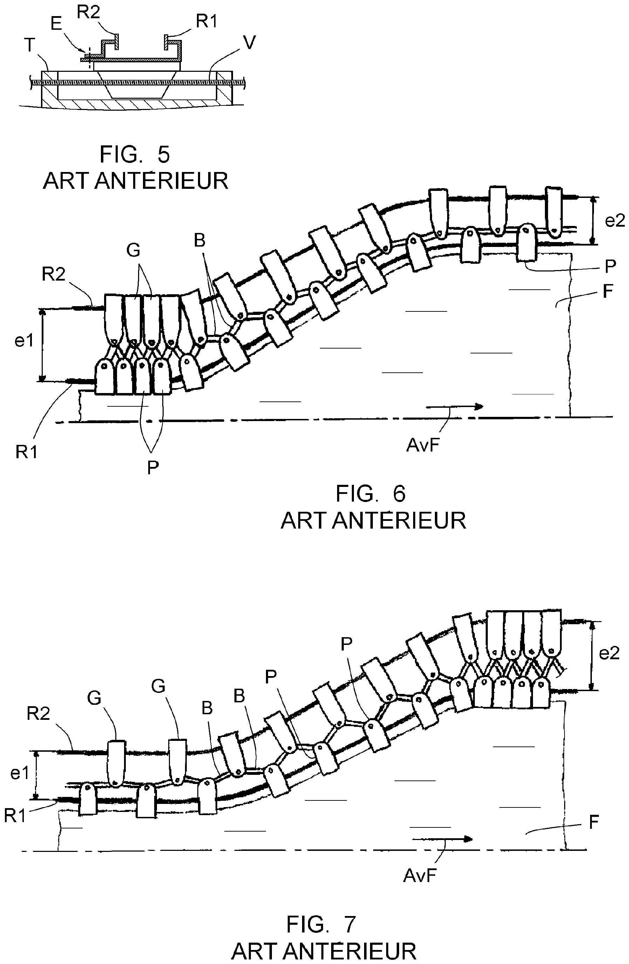

La figure 3 est une vue similaire à la figure 2, sur laquelle ont été ajoutés les moyens permettant une déformation longitudinale élastique des rails R1, R2 selon une inflexion telle que celle qui est visible sur les figures 5 et 7, cette inflexion permettant de réaliser l'étirage transversal du film F en même temps que se réalise l'étirage longitudinal de ce film. L'embase E des rails R1 et R2 est montée sur trois châssis indépendants C successifs, qui sont reliés de façon pivotante les uns aux autres, cette embase E s'interrompant au niveau des portions des rails R1, R2 qui chevauchent les liaisons pivotantes des châssis C pour permettre la déformation des rails. Les pivots selon lesquels se réalisent ces pivotements des châssis C sont montés sur des coulisseaux Co déplaçables transversalement au moyen de vis V calées axialement sur une table T. La figure 4 est une vue du sous-ensemble en coupe transversale.

Ces dispositifs, connus depuis de très nombreuses années, et dits "de première génération", présentent l'inconvénient que les taux d'étirement longitudinal et transversal ne sont pas réglables, et sont donc non utilisables pour la production des films de haute technologie récemment développés.

Pour remédier à cet inconvénient, des dispositifs ont été imaginés, tels que ceux décrits dans la publication de demande de brevet français N° FR 2 849 801 (dép. N° 03 00400), dans lesquels la distance entre les deux rails de guidage R1, R2 est réglable, l'embase E étant en deux parties permettant de régler la position du rail R2 par rapport au rail R1, comme visible sur la figure 5, qui est une vue du sous-ensemble similaire à la figure 4. Ces dispositifs, dits "de deuxième génération", permettent effectivement le réglage du taux d'étirement transversal, par réglage du degré de divergence des rails R1, R2 par rapport à l'axe médian longitudinal du film, et le réglage du taux d'étirement longitudinal, par réglage de la distance entre les rails R1 et R2. Comme visible sur la figure 6, qui est une vue de dessus, simplifiée, du sous-ensemble, la distance entre les deux rails R1 et R2 se réduit dans la direction aval, l'écartement mutuel amont e1 de ces rails étant supérieur à l'écartement mutuel aval e2 de ces mêmes rails.

Ces dispositifs ont contribué à réactiver de façon significative l'utilisation des dispositifs d'étirage simultané, mais ces applications ont fait apparaitre très rapidement un certain nombre de limitations et d'inconvénients de ces systèmes.

Une première série d'inconvénients de ces systèmes de deuxième génération résulte de la difficulté qu'il y a à rendre les angles de divergence des rails exactement symétriques par rapport à l'axe médian du film F, et également de la difficulté qu'il y a à rendre les distances entre les rails R1 et R2 situés sur un côté du film exactement symétriques aux distances correspondantes des rails situés sur l'autre côté du film. Il résulte de tels défauts de symétrie que deux pinces P successives qui se trouvent rigoureusement en face l'une de l'autre dans la partie dans laquelle les rails R1, R2 sont parallèles, c'est-à-dire dans une zone dite de préchauffage du film, ne se trouvent pas forcément en face l'une de l'autre dans la zone d'étirage transversal, dans laquelle les rails divergent, ce qui influe de manière néfaste sur l'étirage du film. Cette difficulté est augmentée par la nécessité de prévoir un jeu mécanique entre les rails R1 et les pinces P.

Ce type de difficulté est apparu de façon drastique lorsque ces dispositifs ont été utilisés pour les films dits à caractère optique, pour lesquels il est demandé un réglage très précis des angles d'orientation des cristaux de polymère qui ont une influence directe sur l'indice de réfraction optique des films (étirage à 90° ou à 45°).

Une deuxième difficulté est apparue lorsque ces dispositifs de deuxième génération ont été utilisés pour la fabrication de membranes qui interviennent dans la constitution des batteries de haute performance, en particulier pour l'industrie automobile, et également pour certains films optiques, pour lesquels il est demandé qu'il soit possible de faire cohabiter de façon simultanée un étirage transversal positif (réalisé par divergence des rails) ainsi qu'un taux d'étirement longitudinal dit négatif - c'est-à-dire un rapprochement et non plus un éloignement de deux pinces P successives. Un tel étirage longitudinal négatif, dans ces dispositifs de deuxième génération, ne peut être obtenu que par un éloignement mutuel des rails R1 et R2 dans la direction aval, comme visible sur la figure 7 et non plus un rapprochement, comme cela est le cas lors d'un étirage dit positif ; les pinces P, lors de leur déplacement, si possible à vitesse élevée, doivent non pas descendre le long de rails R1, R2 convergents mais au contraire remonter le long de rails R1, R2 divergents, comme visible sur la figure 7. Ce mouvement des pinces P crée l'apparition d'efforts considérables, et dans certains cas, une impossibilité d'utiliser ces dispositifs avec les taux d'étirement requis par le procédé.

Pour remédier à l'inconvénient de l'apparition d'efforts trop importants sur les organes de guidage lors de l'utilisation de taux d'étirement longitudinal négatifs, des dispositifs supplémentaires d'entraînement ont été imaginés, dont le principe est la mise en place d'une roue dentée entraînant directement les pinces pour aider à leur déplacement lors de l'apparition de ces efforts importants. Ces dispositifs ne sont pas des solutions satisfaisantes étant donné que la roue dentée a par définition un nombre de dents fixe dont l'écartement doit correspondre rigoureusement à l'écartement des pinces dont elles assurent l'entraînement, ce qui revient à ajouter, sur un dispositif auquel on demande d'être par définition réglable, un dispositif d'entraînement complémentaire qui est lui-même non réglable. Il en résulte que, pour toute modification du taux d'étirement, il doit y avoir un remplacement de la roue dentée chargée de l'entraînement complémentaire, ce qui est complexe et fastidieux à réaliser.

Un autre type de difficulté est apparu dans les dispositifs dit de deuxième génération lorsqu'il a été nécessaire d'utiliser des systèmes d'étirage simultané pour la fabrication de membranes mettant en jeu certains types de polymères pour lesquels la porosité souhaitée ne peut être obtenue que par utilisation de taux d'étirement longitudinal extrêmement élevés, pouvant atteindre 1:40 ou 1:50, donc très éloignés des taux d'étirement classiques, qui sont de l'ordre de 1:7 à 1:10 au grand maximum. En effet, dans les systèmes de deuxième génération, le taux d'étirement longitudinal maximum autorisé par le système est directement lié à la longueur des bielles qui relient les pinces aux organes de guidage.

La nécessité d'atteindre des valeurs très élevées du taux d'étirement longitudinal rendrait donc nécessaire, sur ces systèmes, un allongement démesuré des bielles et donc un écartement correspondant du rail avant et du rail arrière, ce qui, compte tenu des jeux nécessaires au déplacement, rendrait impossible le fonctionnement d'un tel système.

La présente invention vise à remédier à l'ensemble des inconvénients précités des dispositifs existants.

Les publications de demandes de brevet N° US 3,491,402 A, US 3,148,409 A et JP 2011/126024 A montrent divers systèmes selon l'art antérieur, qui ne permettant pas d'atteindre cet objectif.

Un objectif de l'invention est donc de fournir un dispositif permettant un réglage des taux d'étirements longitudinal et transversal ne posant pas les difficultés précitées d'obtention de parfaites symétries dans les positionnements des rails par rapport à l'axe médian du film et dans les positionnements des rails l'un par rapport à l'autre sur chaque côté du film.

Un autre objectif de l'invention est de fournir un dispositif permettant une augmentation substantielle des taux d'étirement longitudinal possibles, et notamment d'atteindre des taux d'étirement longitudinal extrêmement élevés, jusqu'à 1:40 ou 1:50.

Un autre objectif encore de l'invention est de fournir un dispositif permettant de mettre en œuvre simultanément un étirage transversal positif, par divergence des rails, et un taux d'étirement longitudinal dit négatif, c'est à dire un rapprochement de deux pinces successives, sans apparition d'efforts considérables pour déplacer les pinces, et sans rendre obligatoires des systèmes complémentaires de déplacement des pinces, en particulier à roues dentées.

Le dispositif concerné comprend, de manière connue en soi, de chaque côté du film à étirer,
- des organes de saisie d'un bord latéral du film, notamment sous la forme de pinces ;
- un premier rail de guidage, proche du film, sur lequel sont placés ces organes de saisie et le long duquel ces organes de saisie sont aptes à se déplacer ;
- des organes de guidage ;
- un deuxième rail de guidage, sur lequel sont placés ces organes de guidage et le long duquel ces organes de guidage sont aptes à se déplacer ; ce deuxième rail est relié de façon rigide audit premier rail, en ce sens qu'il n'est pas réglable en position par rapport à ce premier rail dans une direction transversale au film ; et
- des premières bielles reliant les organes de saisie et les organes de guidage, ces premières bielles étant mobiles par rapport à ces organes de saisie et ces organes de guidage selon des premiers axes.

Selon l'invention, sur chaque côté du film,
- chaque organe de guidage est relié à un seul organe de saisie par une ou plusieurs desdites premières bielles, et est relié à un premier organe longitudinal de réglage par une ou plusieurs deuxièmes bielles, cette ou ces deuxièmes bielles étant mobiles par rapport à cet organe de guidage et à ce premier organe longitudinal de réglage selon des deuxièmes axes parallèles auxdits premier axes ; ladite ou lesdites deuxièmes bielles d'un premier organe de guidage et ladite ou lesdites deuxièmes bielles d'un deuxième organe de guidage consécutif audit premier organe de guidage sont reliées audit premier organe longitudinal de réglage en des points de pivotement qui sont confondus ou proches sur ce premier organe longitudinal de réglage ; et
- le dispositif inclut des moyens de réglage de la position et de l'orientation dudit premier organe longitudinal de réglage par rapport auxdits premier et deuxième rails de guidage.

Ainsi, l'invention consiste à concevoir de revenir à une solution de rails non réglables en position l'un par rapport à l'autre dans une direction transversale au film, de façon à solutionner les problèmes de symétrie précités que pose un dispositif dit "de deuxième génération", tout en concevant le système desdites premières et deuxièmes bielles, par lequel deux organes de saisie consécutifs ne sont plus reliés à un unique organe de guidage par lesdites premières bielles mais à deux organes de guidage consécutifs par ces même premières bielles, les deux organes de guidage consécutifs étant reliés l'un à l'autre par lesdites deuxièmes bielles dont l'ouverture ou la fermeture peut être commandée et guidée au moyen dudit premier organe de réglage, la position et l'orientation de ce premier organe de réglage par rapport aux rails pouvant être réglée.

Ce premier organe longitudinal de réglage, dit également « organe allongé de réglage », lorsqu'il est positionné de façon éloignée dudit deuxième rail, réalise une fermeture de l'angle formé par lesdites deuxièmes bielles et donc réalise un rapprochement des deux organes de guidage consécutifs, et, lorsqu'il est positionné de façon rapprochée dudit deuxième rail, réalise une ouverture de l'angle formé par lesdites deuxièmes bielles et donc réalise un éloignement des deux organes de guidage consécutifs. Les longueurs des deuxièmes bielles s'ajoutent donc aux longueurs des premières bielles pour ce qui est de l'écart maximal possible entre deux organes de saisie consécutifs et permettent ainsi l'obtention de taux d'étirement longitudinal substantiellement augmentés par rapport à ce que permettent les dispositifs existants.

L'orientation du premier organe longitudinal de réglage par rapport aux rails permet d'influer sur l'évolution de l'écart entre les organes de saisie au long des rails, et donc de pouvoir régler le taux d'étirement longitudinal du film. Ainsi, le deuxième rail allant en se rapprochant dudit premier rail vers l'aval dans le sens de l'avance du film, et ledit premier organe longitudinal de réglage étant situé entre les deux rails, une orientation de ce premier organe longitudinal de réglage de façon strictement parallèle audit deuxième rail n'aura pas d'incidence sur l'évolution de l'écart entre les paires d'organes de saisie successives ; l'orientation de ce premier organe longitudinal de réglage d'une façon telle que ce premier organe de réglage se rapproche dudit deuxième rail dans la direction aval réalisera une ouverture progressive de l'angle entre les paires successives de deuxièmes bielles dans cette direction aval et réalisera donc une augmentation du taux d'étirement longitudinal ; l'orientation de ce premier organe longitudinal de réglage d'une façon telle que ce premier organe de réglage s'éloigne dudit deuxième rail dans la direction aval réalisera une fermeture progressive de l'angle entre les paires successives de deuxièmes bielles dans cette direction aval et réalisera donc une diminution du taux d'étirement longitudinal.

Lorsqu'il est souhaité que le dispositif permette l'obtention d'un taux d'étirement longitudinal négatif, l'organe allongé de réglage est positionné de façon à permettre une ouverture partielle desdites deuxièmes bielles dans une zone du dispositif dans laquelle il n'y a pas lieu d'opérer un étirage longitudinal du film, en particulier dans la partie de préchauffage du four permettant de rendre malléable le matériau du film, puis de façon à opérer un renfermement progressif desdites deuxièmes bielles dans une zone du dispositif dans laquelle il y a lieu de mettre en œuvre ledit taux d'étirement longitudinal négatif.

L'invention fournit ainsi un dispositif pouvant être qualifié comme étant "de troisième génération", consistant à conserver les avantages bien connus du système mécanique pantographe "de première génération", et en dissociant complètement la fonction guidage de l'ensemble mobile que constituent les organes de saisie et les bielles, et la fonction réglage du taux d'étirement longitudinal.

De préférence, sur chaque côté du film, le dispositif comprend un deuxième organe longitudinal de réglage et une série de troisièmes bielles, respectivement homologues audit premier organe longitudinal de réglage et auxdites deuxièmes bielles, ce deuxième organe longitudinal de réglage et cette série de troisièmes bielles étant situés sur un côté des organes de saisie, des premières bielles et des organes de guidage qui est opposé au côté de ces mêmes organes de saisie, premières bielles et organes de guidage sur lequel se trouve ledit premier organe longitudinal de réglage et la série desdites deuxièmes bielles.

Ce deuxième organe allongé de réglage et cette série de troisièmes bielles permettent une meilleure répartition des efforts et un travail du système sans effort s'exerçant en porte-à-faux.

Selon une possibilité, chaque paire de dites deuxièmes bielles s'étend entre les deux dites premières bielles associées aux mêmes organes de guidage que cette paire de deuxièmes bielles. Dans ce cas, ledit premier organe longitudinal de réglage, et le cas échéant ledit deuxième organe longitudinal de réglage, peuvent être sous la forme d'un rail à section en U inversé, formant une rainure de guidage du pivot reliant les deux bielles de chaque paire de deuxièmes bielles l'une à l'autre.

Selon une autre possibilité, chaque paire de deuxièmes bielles s'étend sur le côté dudit deuxième rail opposé audit premier rail. Dans ce cas, ledit premier organe longitudinal de réglage peut être sous la forme d'un rail similaire auxdits premier ou deuxième rails, présentant des pièces de guidage engagées sur lui et mobiles sur lui, chacune de ces pièces de guidage étant solidaire d'un pivot sur lequel sont montées pivotantes lesdites deuxièmes bielles.

De préférence, le dispositif comprend un premier moteur linéaire associé audit premier organe longitudinal de réglage, et le cas échéant un deuxième moteur linéaire associé audit deuxième organe longitudinal de réglage, agissant sur chaque point de jonction desdites deuxièmes bielles de façon à assister le mouvement de ces deuxièmes bielles le long dudit organe longitudinal de réglage lors de l'opération d'étirage longitudinal du film.

Ce moteur linéaire permet d'assister ce mouvement des deuxièmes bielles lorsque l'effort nécessaire pour obtenir l'ouverture ou la fermeture des bielles est important, comme cela est le cas par exemple lors du traitement d'un film optique épais.

L'invention sera bien comprise, et d'autres caractéristiques et avantages de celle-ci apparaîtront, en référence au dessin schématique annexé, représentant, à titre d'exemples non limitatifs, plusieurs formes de réalisation du dispositif concerné. Dans ce dessin :
la figure 8 est une vue très simplifiée, de dessus, de l'un des sous-ensembles constituant ce dispositif situé sur un côté latéral du film à étirer, selon une première forme de réalisation ;
la figure 9 est une vue de ce sous-ensemble en coupe transversale, à échelle agrandie, selon une première forme de mise en œuvre ;
la figure 10 est une vue du sous-ensemble similaire à la figure 9 selon une deuxième forme de mise en œuvre ;
la figure 11 est une vue dudit sous-ensemble similaire à la figure 8, selon une deuxième forme de réalisation ; et
la figure 12 est une vue de ce sous-ensemble en coupe transversale.

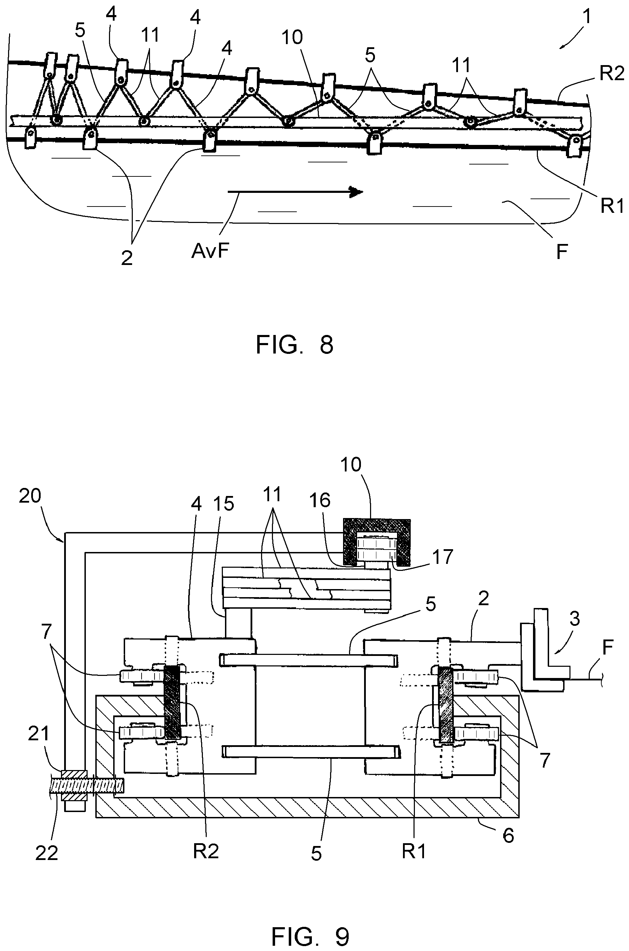

La figure 8 représente l'un des sous-ensembles latéraux 1 que comprend un dispositif d'étirage d'un film thermoplastique F sur un côté de ce film, ce dispositif incluant un deuxième sous-ensemble, identique au sous-ensemble 1 représenté, disposé sur l'autre côté du film F, de façon symétrique à ce premier sous-ensemble 1 par rapport à l'axe médian longitudinal du film F.

Il se comprend que cette figure 8 ressemble à la figure 1 et la figure 9 à la figure 2 ; l'on n'y retrouve :
- le film F ;
- la flèche AvF représentant la direction de l'avance du film F dans le tunnel chauffant permettant de rendre malléable la matière de ce film ;
- le premier et le deuxième rail de guidage R1, R2 ; le deuxième rail R2 converge vers le premier rail R1 en allant dans la direction aval ;
- les organes de saisie 2 incluant des pinces 3 de saisie d'un bord latéral du film F, engagés sur le premier rail R1 ;
- les organes de guidage 4 engagés sur le deuxième rail R2 ;
- des premières paires de bielles 5 reliant un organe de saisie 2 à un organe de guidage 4,
- l'embase 6 reliant les rails R1, R2 l'un à l'autre ; et
- des galets 7 équipant les organes de saisie 2 et les organes de guidage 4 et roulant contre les faces internes et externes et les tranches supérieures et inférieures de ces rails.

Le sous-ensemble est également équipé des mêmes moyens que ceux décrits précédemment en référence aux figures 3 et 4 (châssis articulés C, coulisseaux Co, vis V et table T) pour permettre de réaliser une inflexion des rails R1, R2 telle que celle visible sur les figures 6 et 7 afin de permettre un étirage du film F dans une direction transversale à la direction d'avancée de ce film.

Comme cela est représenté, à la différence de la figure 1, chaque organe de guidage 4 est relié à un seul organe de saisie 2 par une seule paire de bielles 5 superposées, dites ci-après "premières bielles", et est relié à un longeron de réglage 10 par une paire de deuxièmes bielles 11, ayant une longueur inférieure à celle des premières bielles 5.

Les premiers axes selon lesquels les premières bielles 5 sont mobiles par rapport à l'organe de saisie 2 et à l'organe de guidage 4 correspondants sont parallèles aux deuxièmes axes selon lesquels les deuxièmes bielles 11 sont mobiles par rapport aux organes de guidage 4 correspondants et au longeron de réglage 10.

Du côté de l'organe de guidage 4, ce deuxième axe est formé par un pivot 15, et, du côté opposé, ce deuxième axe est formé par un pivot 16 sur lequel sont montées deux galets 17, ces galets étant reçus et pouvant rouler à l'intérieur d'une rainure formée par le longeron 10.

Comme visible sur la figure 9, le longeron 10 a une section transversale en U inversé, afin de former ladite rainure. Ce longeron 10 présente des ouvertures aménagées dans sa paroi centrale, dans des portions se trouvant à cheval des articulations des châssis C telles que visibles sur la figure 3 ; ces ouvertures permettent la déformation transversale de ce longeron 10 de telle sorte qu'il puisse suivre l'inflexion qui est donnée au rails R1 et R2 afin de réaliser l'étirage transversal du film F.

Le longeron 10 est relié à des potences 20, situées de proche en proche sur la longueur de ce longeron. La base du montant de chaque potence 20 est solidaire d'un écrou 21 traversé par une vis 22 perpendiculaire à la direction AvF d'avance du film F ; cette vis 22 traverse le flanc de l'embase 6 portant le deuxième rail R2 et est mobile en rotation par rapport à ce flanc tout en étant arrêtée par rapport à celui-ci dans le sens axial, par exemple par des goupilles. Chaque vis 22 est reliée à des moyens pour sa manœuvre en rotation, tels qu'un volant ou un moteur ; l'actionnement des différentes vis 22 dans un sens de rotation ou dans l'autre de ces vis permet de déplacer l'ensemble formé par les potences 20 et le longeron 10 dans une direction perpendiculaire à la direction AvF d'avance du film F.

Il se comprend que ces vis 22 et écrous 21 constituent ainsi des moyens de réglage de la position et de l'orientation du longeron 10 par rapport au premier rail R1 et au deuxième rail R2.

En considérant la figure 8, il apparaît que le longeron 10 est positionné de façon proche du premier rail R1, en étant sensiblement parallèle à ce rail R1 ; du fait de la convergence du rail R2 vers le rail R1 dans la direction aval, le déplacement des organes 2 et 4 le long de ces rails R1, R2 respectifs conduit à ouvrir progressivement l'angle que forment les paires de deuxièmes bielles 11 reliées l'une à l'autre, faisant que la distance entre deux organes 4 consécutifs augmente dans la direction aval et donc, de façon démultipliée par les bielles 10, que la distance entre deux organes 2 consécutifs augmente corrélativement.

En comparant les figures 1 et 8, il apparaît que, sur le dispositif selon l'invention représenté sur la figure 8, les longueurs des deuxièmes bielles 11 s'ajoutent aux longueurs des premières bielles 5 pour ce qui est de l'écart maximal possible entre deux organes de saisie 2 consécutifs et qu'elles permettent ainsi l'obtention de taux d'étirement longitudinal substantiellement augmentés par rapport à ce que permet un dispositif existant tel que montré sur la figure 1.

En référence toujours à la figure 8, il se comprend que l'orientation du longeron 10 par rapport aux rails R1, R2 permet d'influer sur l'évolution de l'écart entre les organes de saisie 2 au long des rails R1, R2, et donc de pouvoir régler le taux d'étirement longitudinal du film F, avec la possibilité de réaliser un taux d'étirement longitudinal dit négatif, c'est-à-dire avec un rapprochement de deux organes de saisie 2 successifs. Ainsi, le longeron 10, s'il est orienté de façon à ce qu'une portion aval de ce longeron se rapproche du rail R2 dans la direction aval, réalisera une ouverture progressive de l'angle entre les paires successives de deuxièmes bielles 11 dans cette direction aval, de façon supplémentaire à ce que réalise la convergence du rail R2 avec le rail R1 dans la direction aval ; le longeron 10 réalisera donc une augmentation du taux d'étirement longitudinal ; au contraire, ce même longeron 10, s'il est orienté de façon à ce qu'une portion aval de ce longeron s'éloigne du rail R2 dans la direction aval, réalisera une fermeture progressive de l'angle entre les paires successives de deuxièmes bielles 11 dans cette direction aval, venant en soustraction de l'ouverture de ces deuxièmes bielles 11 que réalise la convergence du rail R2 avec le rail R1 dans la direction aval ; le longeron 10 réalisera donc une diminution du taux d'étirement longitudinal.

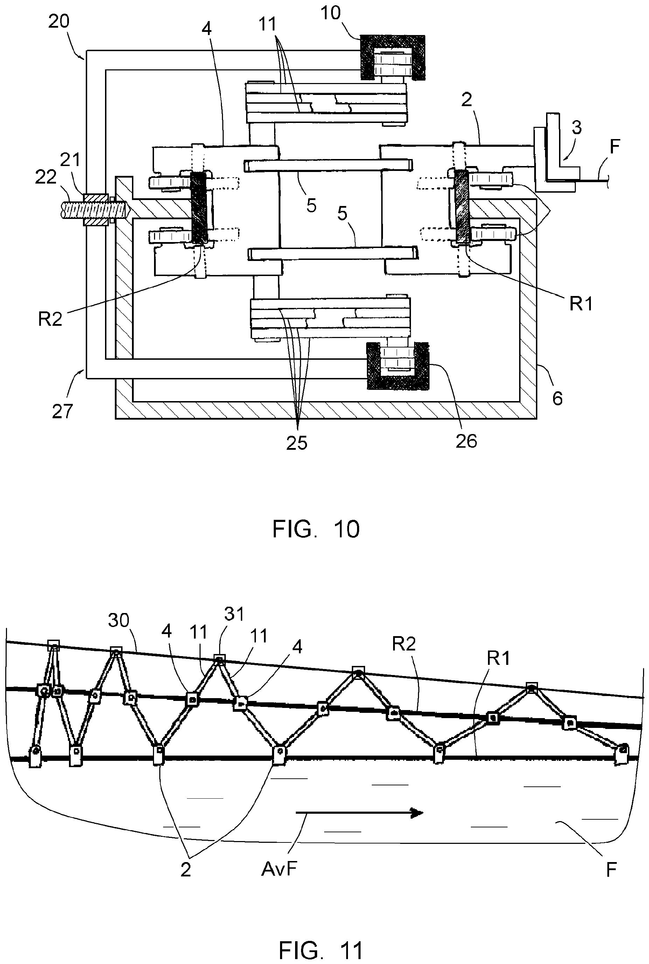

La figure 10 est une vue similaire à la figure 9, montrant une variante de mise en œuvre dans laquelle le sous-ensemble 1 comprend un deuxième ensemble de dites deuxième bielles 25 reliées à un deuxième longeron de réglage 26, se trouvant sur le côté opposé à celui sur lequel se trouve le premier ensemble de bielles 11 / longeron 10 ; ce deuxième ensemble permet une meilleure répartition des efforts lorsque le dispositif est destiné à supporter des efforts importants. Il apparaît que les potences 27 du deuxième ensemble rejoignent les potences 20 du premier ensemble au niveau de l'écrou 21 et qu'elles peuvent donc être actionnées simultanément, au moyen de la même vis 22.

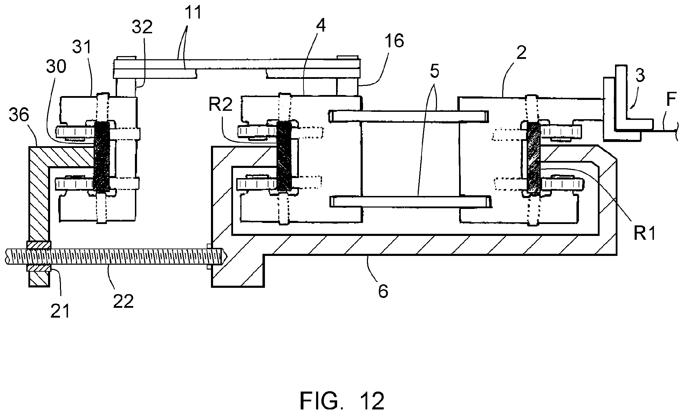

Les figures 11 et 12 représentent une deuxième forme de réalisation du dispositif selon l'invention ; par simplification, les parties ou éléments de la première forme de réalisation déjà décrits plus haut seront désignés par les mêmes références numériques et ne seront pas à nouveau décrits. Dans cette deuxième forme de réalisation, chaque paire de deuxièmes bielles 11 s'étend sur le côté du deuxième rail R2 opposé au premier rail R1. Dans ce cas, il n'y a pas de longeron 10 mais, en lieu et place, un rail 30 similaire auxdits premier ou deuxième rails R1, R2, présentant des pièces de guidage 31 engagées sur lui et mobiles le long de lui, à l'instar des pièces 4, chacune de ces pièces de guidage 31 étant solidaire d'un pivot 32 sur lequel sont montées pivotantes lesdites deuxièmes bielles 11. Le rail 30 est solidaire d'embases 36 fixées à lui de proche en proche sur sa longueur, reliées à des écrous 21 en prise avec des vis 22, pour le réglage de la position et de l'orientation du rail 30.

Comme cela apparaît de ce qui précède, l'invention fournit un dispositif présentant des avantages déterminants, exposés plus haut, par rapport aux dispositifs homologues conformes à la technique antérieure.

En particulier, le dispositif selon l'invention permet, pour les films optiques, un réglage très précis de l'isotropie de l'indice de réfraction des films produits, puisque pour ce type de film, un taux d'étirement transversal fixe est tout à fait acceptable, à condition que la possibilité de réglage du taux d'étirement longitudinal permette une orientation des structures cristallines dans le film selon l'angle désiré, tout en garantissant une extrême précision du positionnement des pinces entre le côté droit et le côté gauche du film.

Pour les membranes, et en particulier pour celles destinées à la fabrication des batteries de haute performance, le dispositif selon l'invention permet d'obtenir une parfaite isotropie de la porosité du film sur toute la longueur du film, qui impose que pour un taux d'étirement transversal donné, qui peut sans inconvénient être fixe, le taux d'étirement longitudinal soit réparti le long de l'étirage transversal en fonction de ce qui est exactement nécessaire pour obtenir une orientation à 90° sur l'ensemble de la portion de film, et donc l'isotropie de porosité souhaitée.

L'invention a été décrite plus haut en référence à des formes de réalisation fournie à titre d'exemple. Il va de soi qu'elle n'est pas limitée à ces formes de réalisation et que la portée de la protection est définie par les revendications annexées.

## Revendications

1. Dispositif d'étirage de film thermoplastique simultanément dans le sens longitudinal et dans le sens transversal, comprenant, de chaque côté du film à étirer,
- des organes (2) de saisie d'un bord latéral du film (F), notamment sous la forme de pinces ;
- un premier rail de guidage (R1), proche du film (F), sur lequel sont placés ces organes de saisie (2) et le long duquel ces organes de saisie (2) sont aptes à se déplacer ;
- des organes de guidage (4) ;
- un deuxième rail de guidage (R2), sur lequel sont placés ces organes de guidage (4) et le long duquel ces organes de guidage (4) sont aptes à se déplacer ; ce deuxième rail (R2) est relié de façon rigide audit premier rail (R1), en ce sens qu'il n'est pas réglable en position par rapport à ce premier rail (R1) dans une direction transversale au film (F) ; et
- des premières bielles (5) reliant les organes de saisie (2) et les organes de guidage (4), ces premières bielles (5) étant mobiles par rapport à ces organes de saisie (2) et ces organes de guidage (4) selon des premiers axes ;
**caractérisé en ce que**, sur chaque côté du film (F),
- chaque organe de guidage (4) est relié à un seul organe de saisie (2) par une ou plusieurs desdites premières bielles (5), et est relié à un premier organe longitudinal de réglage (10 ; 30) par une ou plusieurs deuxièmes bielles (11), cette ou ces deuxièmes bielles (11) étant mobiles par rapport à cet organe de guidage (4) et à ce premier organe longitudinal de réglage (10 ; 30) selon des deuxièmes axes parallèles auxdits premier axes ; ladite ou lesdites deuxièmes bielles (11) d'un premier organe de guidage (4) et ladite ou lesdites deuxièmes bielles (11) d'un deuxième organe de guidage (4) consécutif audit premier organe de guidage (4) sont reliées audit premier organe longitudinal de réglage (10 ; 30) en des points de pivotement qui sont confondus ou proches sur ce premier organe longitudinal de réglage (10 ; 30) ; et
- le dispositif inclut des moyens (20, 21, 22) de réglage de la position et de l'orientation dudit premier organe longitudinal de réglage (10 ; 30) par rapport auxdits premier et deuxième rails (R1, R2) de guidage.

2. Dispositif selon la revendication 1, **caractérisé en ce que**, sur chaque côté du film (F), le dispositif comprend un deuxième organe longitudinal de réglage (26) et une série de troisièmes bielles (25), respectivement homologues audit premier organe longitudinal de réglage (10) et auxdites deuxièmes bielles (11), ce deuxième organe longitudinal de réglage (26) et cette série de troisièmes bielles (25) étant situés sur un côté des organes de saisie (2), des premières bielles (5) et des organes de guidage (4) qui est opposé au côté de ces mêmes organes de saisie (2), premières bielles (5) et organes de guidage (4) sur lequel se trouve ledit premier organe longitudinal de réglage (10) et la série desdites deuxièmes bielles (11).

3. Dispositif selon la revendication 1 ou la revendication 2, **caractérisé en ce que** chaque paire de deuxièmes bielles (11) s'étend entre les deux premières bielles (5) associées aux mêmes organes de guidage (4) que cette paire de deuxièmes bielles (11).

4. Dispositif selon la revendication 3, **caractérisé en ce que** ledit premier organe longitudinal de réglage (10), et le cas échéant ledit deuxième organe longitudinal de réglage (26), sont sous la forme d'un rail à section en U inversé, formant une rainure de guidage du pivot (16) reliant l'une à l'autre les deux bielles de chaque paire de dites deuxièmes bielles (11).

5. Dispositif selon la revendication 1 ou la revendication 2, **caractérisé en ce que** chaque paire de deuxièmes bielles (11) s'étend sur le côté dudit deuxième rail (R2) qui est opposé audit premier rail (R1).

6. Dispositif selon la revendication 5, **caractérisé en ce que** ledit premier organe longitudinal de réglage est sous la forme d'un rail (30) présentant des pièces de guidage (31) engagées sur lui et mobiles sur lui, chacune de ces pièces de guidage (31) étant solidaire d'un pivot (32) sur lequel sont montées pivotantes lesdites deuxièmes bielles (11).

7. Dispositif selon l'une des revendications 1 à 6, **caractérisé en ce qu'**il comprend un premier moteur linéaire associé audit premier organe longitudinal de réglage (10 ; 30), et le cas échéant un deuxième moteur linéaire associé audit deuxième organe longitudinal de réglage (26), agissant sur chaque point de jonction desdites deuxièmes bielles (11) de façon à assister le mouvement de ces deuxièmes bielles (11) le long dudit organe longitudinal de réglage (10; 30 ; 26) lors de l'opération d'étirage longitudinal du film (F).

## Patentansprüche

1. Vorrichtung zum Recken thermoplastischer Folie gleichzeitig in Längsrichtung und in Querrichtung, aufweisend, auf jeder Seite der zu reckenden Folie,
- Greifelemente (2) zum Greifen eines seitlichen Randes der Folie (F), insbesondere in Form von Zangen;
- eine erste Führungsschiene (R1), in der Nähe der Folie (F), auf der diese Greifelemente (2) platziert sind und entlang deren diese Greifelemente (2) in der Lage sind, sich zu bewegen;
- Führungselemente (4);
- eine zweite Führungsschiene (R2), auf der diese Greifelemente (4) platziert sind und entlang deren diese Führungselemente (4) in der Lage sind, sich zu bewegen; wobei diese zweite Schiene (R2) mit der ersten Schiene (R1) starr verbunden ist, in dem Sinne, dass sie gegenüber dieser ersten Schiene (R1) in einer Querrichtung zur Folie (F) in ihrer Position nicht verstellbar ist; und
- erste Schubstangen (5), welche die Greifelemente (2) und die Führungselemente (4) verbinden, wobei diese Schubstangen (5) relativ zu diesen Greifelementen (2) und zu diesen Führungselementen (4) gemäß ersten Achsen beweglich sind;
**dadurch gekennzeichnet, dass**, auf jeder Seite der Folie (F),
- jedes Führungselement (4) mit einem einzigen Greifelement (2) durch eine oder mehrere der ersten Schubstangen (5) verbunden ist und mit einem ersten längsgerichteten Einstellelement (10; 30) durch eine oder mehrere zweite Schubstangen (11) verbunden ist, wobei diese zweite oder diese zweiten Schubstange(n) (11) relativ zu diesem Führungselement (4) und zu diesem längsgerichteten Einstellelement (10; 30) gemäß zweiten Achsen beweglich ist bzw. sind, die zu den ersten Achsen parallel sind; die zweite oder die zweiten Schubstange(n) (11) eines ersten Führungselements (4) und die zweite oder die zweiten Schubstange(n) (11) eines zweiten Führungselements (4), das sich an das erste Führungselement (4) anschließt, mit dem ersten längsgerichteten Einstellelement (10; 30) in Schwenkpunkten verbunden ist bzw. sind, die auf diesem ersten längsgerichteten Einstellelement (10; 30) zusammenfallen oder benachbart sind; und
- die Vorrichtung Mittel (20, 21, 22) zum Einstellen der Position und der Orientierung des ersten längsgerichteten Einstellelements (10; 30) relativ zu der ersten und zweiten Führungsschiene (R1, R2) aufweist.

2. Vorrichtung nach Anspruch 1, **dadurch gekennzeichnet, dass**, auf jeder Seite der Folie (F), die Vorrichtung ein zweites längsgerichtetes Einstellelement (26) und eine Reihe dritter Schubstangen (25) aufweist, die jeweils dem ersten längsgerichteten Einstellelement (10) und den zweiten Schubstangen (11) entsprechen, wobei dieses zweite längsgerichtete Einstellelement (26) und diese Reihe dritter Schubstangen (25) sich auf einer Seite der Greifelemente (2), der ersten Schubstangen (5) und der Führungselemente (4) befinden, die der Seite dieser gleichen Greifelemente (2), ersten Schubstangen (5) und Führungselemente (4), auf der sich das erste längsgerichtete Einstellelement (10) und die Reihe zweiter Schubstangen (11) befindet, gegenüberliegt.

3. Vorrichtung nach Anspruch 1 oder 2, **dadurch gekennzeichnet, dass** jedes Paar zweiter Schubstangen (11) sich zwischen den zwei ersten Schubstangen (5) erstreckt, die den gleichen Führungselementen (4) zugeordnet sind wie dieses Paar zweiter Schubstangen (11).

4. Vorrichtung nach Anspruch 3, **dadurch gekennzeichnet, dass** das erste längsgerichtete Einstellelement (10), und gegebenenfalls das zweite längsgerichtete Einstellelement (26), die Form einer Schiene mit dem Querschnitt eines umgekehrten U aufweisen, die eine Führungsnut für den Drehzapfen (16) bildet, der die zwei Schubstangen jedes Paares zweiter Schubstangen (11) miteinander verbindet.

5. Vorrichtung nach Anspruch 1 oder 2, **dadurch gekennzeichnet, dass** jedes Paar zweiter Schubstangen (11) sich auf der Seite der zweiten Schiene (R2) erstreckt, die der ersten Schiene (R1) gegenüberliegt.

6. Vorrichtung nach Anspruch 5, **dadurch gekennzeichnet, dass** das erste längsgerichtete Einstellelement die Form einer Schiene (30) aufweist, die Führungsteile (31) aufweist, die auf ihr in Eingriff und auf ihr beweglich sind, wobei jedes dieser Führungsteile (31) mit einem Drehzapfen (32) fest verbunden ist, auf dem die zweiten Schubstangen (11) schwenkbar gelagert sind.

7. Vorrichtung nach einem der Ansprüche 1 bis 6, **dadurch gekennzeichnet, dass** sie einen ersten Linearmotor aufweist, der dem ersten längsgerichteten Einstellelement (10; 30) zugeordnet ist, und gegebenenfalls einen zweiten Linearmotor aufweist, der dem zweiten längsgerichteten Einstellelement (26) zugeordnet ist, der auf jeden Verbindungspunkt der zweiten Schubstangen (11) einwirkt, um die Bewegung dieser zweiten Schubstangen (11) entlang des längsgerichteten Einstellelements (10; 30; 26) beim Vorgang zum längsgerichteten Recken der Folie (F) zu unterstützen.

## Claims

1. A device for stretching a thermoplastic film simultaneously in the longitudinal direction and the transverse direction, comprising, on each side of the film to be stretched,
- grasping members (2) for grasping a lateral edge of the film (F), in particular in the form of clamps;
- a first guide rail (R1), close to the film (F), on which these grasping members (2) are placed and along which these grasping members (2) are able to move;
- guide members (4);
- a second guide rail (R2), on which these guide members (4) are placed and along which these guide members (4) are able to move; this second rail (R2) is rigidly connected to said first rail (R1), in that its position is not adjustable relative to this first rail (R1) in a direction transverse to the film (F); and
- first connecting rods (5) connecting the grasping members (2) and the guide members (4), the first connecting rods (5) being movable relative to these grasping members (2) and these guide members (4) along first axes;
**Characterized in that**, on each side of the film (F),
- each guide member (4) is connected to a single grasping member (2) by one or several of said first connecting rods (5), and is connected to a first longitudinal adjusting member (10; 30) by one or several second connecting rods (11), this or these second connecting rods (11) being movable relative to the guide member (4) and relative to this first longitudinal adjusting member (10; 30) along second axes parallel to said first axes; said second connecting rod(s) (11) of a first guide member (4) and said second connecting rod(s) (11) of a second guide member (4) consecutive to said first guide member (4) are connected to said first longitudinal adjusting member (10; 30) at pivot points that are combined or close on this first longitudinal adjusting member (10; 30); and
- the device includes adjusting means (20, 21, 22) for adjusting the position and orientation of said first longitudinal adjusting member (10; 30) relative to said first and second guide rails (R1, R2).

2. The device according to claim 1, **characterized in that**, on each side of the film (F), the device comprises a second longitudinal adjusting member (26) and a series of third connecting rods (25), respectively homologous to said first longitudinal adjusting member (10) and said second connecting rods (11), this second longitudinal adjusting member (26) and this series of third connecting rods (25) being situated on one side of the grasping members (2), first connecting rods (5) and guide members (4) that is opposite the side of these same grasping members (2), first connecting rods (5) and guide members (4) on which are located said first longitudinal adjusting member (10) and the series of said second connecting rods (11).

3. The device according to claims 1 or 2, wherein each pair of said second connecting rods (11) extends between the two said first connecting rods (5) associated with the same guide members (4) as this pair of second connecting rods (11).

4. The device according to claim 3, wherein said first longitudinal adjusting member (10), and if applicable said second longitudinal adjusting member (26), are in the form of a rail with an upside down U-shaped section, forming a guide slot for guiding the pivot (16) which connects the two connecting rods of each pair of second connecting rods (11) to one another.

5. The device according to claims 1 or 2, wherein each pair of second connecting rods (11) extends over the side of said second rail (R2) opposite said first rail (R1).

6. The device according to claim 5, wherein said first longitudinal adjusting member is in the form of a rail (30), having guide parts (31) engaged on it and movable on it, each of these guide parts (31) being secured to a pivot (32) on which said second connecting rods (11) are pivotably mounted.

7. The device according to one of claims 1 to 6, that comprises a first linear motor associated with said first longitudinal adjusting member (10; 30), and if applicable, a second linear motor associated with said second longitudinal adjusting member (26), acting on each junction point of said second connecting rods (11) so as to assist the movement of these second connecting rods (11) along said longitudinal adjusting member (10; 30; 26) during the longitudinal stretching operation of the film (F).
